(19) **Europäisches Patentamt**

**European Patent Office**

**Office européen des brevets**

(11) **EP 1 240 077 B1**

(12) **FASCICULE DE BREVET EUROPEEN**

(45) Date de publication et mention
de la délivrance du brevet:
**28.12.2005 Bulletin 2005/52**

(21) Numéro de dépôt: **01978564.1**

(22) Date de dépôt: **18.10.2001**

(51) Int Cl.⁷: **B64C 1/40**, G10K 11/172

(86) Numéro de dépôt international:
**PCT/FR2001/003227**

(87) Numéro de publication internationale:
**WO 2002/032763 (25.04.2002 Gazette 2002/17)**

(54) **PANNEAU INSONORISANT, EN PARTICULIER PANNEAU STRUCTURAL OU D'HABILLAGE D'UN AERONEF A VOILURE TOURNANTE**

SCHALLDAMPFUNGSPLATTE, INSBESONDERE STRUKTURPLATTE ODER VERKLEIDUNGSPLATTE EINES DREHFLÜGELFLUGZEUGES

SOUND-PROOFING PANEL, IN PARTICULAR A ROTORCRAFT STRUCTURAL OR LINING PANEL

(84) Etats contractants désignés:
**DE ES FR GB IT**

(30) Priorité: **20.10.2000 FR 0013452**

(43) Date de publication de la demande:
**18.09.2002 Bulletin 2002/38**

(73) Titulaires:
• **EUROCOPTER**
**13725 Marignane Cédex (FR)**
• **Ateca**
**82000 Montauban (FR)**

(72) Inventeurs:
• **DUSSAC, Marc Francis Vincent**
**Le Mas Neuf, 13140 Miramas (FR)**
• **VIE, Philippe**
**F-31100 Toulouse (FR)**
• **DELVERDIER, Osmin**
**F-31380 St Jean Lherm (FR)**

(74) Mandataire: **Renaud-Goud, Thierry et al**
**GPI & Associés**
**EuroParc de Pichaury**
**Bât D1-1 étage**
**1330, rue Guillibert de la Lauzière**
**13856 Aix-en-Provence Cédex 3 (FR)**

(56) Documents cités:
DE-A- 4 438 813       FR-A- 2 649 356
US-A- 4 667 768       US-A- 5 024 289
US-A- 5 777 947       US-A- 6 085 865

EP 1 240 077 B1

## Description

La présente invention concerne un panneau insonorisant, tel que connu de US-A-5 777 947.

On applique la présente invention plus particulièrement, bien que non exclusivement, à un panneau structural ou un panneau d'habillage d'un aéronef, en particulier d'un aéronef à voilure tournante. On sait qu'un tel panneau présente, outre sa fonction structurale ou d'habillage, généralement une fonction d'insonorisation, en particulier lorsqu'il est monté dans le poste de pilotage ou la cabine des passagers dudit aéronef, où sont engendrés des bruits qui sont susceptibles d'être très gênants pour les pilotes et/ou les passagers.

A cet effet, on notera que, sur un aéronef à voilure tournante, notamment un hélicoptère, les spectres acoustiques définis dans le domaine compris entre 20 Hz et 20 kHz relèvent de la superposition de bruits d'origines différentes, susceptibles d'être rassemblés en deux groupes différents selon leurs caractéristiques spectrales, à savoir les sons purs ou bruits de raies et les bruits à large bande.

De façon connue, les sons purs ou bruits de raies apparaissent notamment, le cas échéant :

- aux fréquences caractéristiques de la chaîne cinématique de l'aéronef ;
- aux fréquences de rotation des pales des rotors (principal et arrière) et aux harmoniques de ces fréquences ;
- aux fréquences de rotation des pales des compresseurs des groupes turbomoteurs ; et/ou
- aux fréquences de rotation des pales des ventilateurs de refroidissement de la boîte de transmission principale ou de distribution d'air en cabine et/ou d'équipements électriques, ainsi qu'aux harmoniques de ces fréquences,

tandis que les bruits à large bande comprennent notamment le cas échéant :

- le bruit de couche limite se développant sur le fuselage ;
- le bruit engendré par les rotors ;
- le bruit d'écoulement des entrées d'air et des tuyères ;
- le bruit de moteur ; et/ou
- le bruit des circuits de climatisation ou de chauffage du poste de pilotage ou de la cabine des passagers.

Tous ces bruits, et plus particulièrement les bruits de raies, sont très gênants pour les pilotes et les passagers.

C'est pourquoi on prévoit souvent, sur les hélicoptères, différents moyens techniques qui sont associés à des panneaux structuraux ou d'habillage, pour réduire le niveau vibratoire ou le rayonnement acoustique de sources de bruit et/ou du fuselage de l'hélicoptère, afin de réduire le bruit interne. A cet effet, diverses actions physiques peuvent être mises en oeuvre par ces moyens techniques, notamment :

- un amortissement des vibrations des panneaux ;
- une atténuation de la transmission acoustique des panneaux ;
- une absorption acoustique, par collage sur une face d'un panneau d'un revêtement de mousse absorbant le bruit ;
- un effet de double cloison entre un panneau structural et un panneau d'habillage associé ; et
- une absorption par "effet de résonateurs d'Helmholtz", en perforant les panneaux.

Les quatre premières actions physiques précitées permettent de diminuer le niveau général du bruit dans un large domaine de fréquences, mais elles entraînent une augmentation de masse importante et très désavantageuse. De plus, la diminution du bruit obtenue alors n'est pas assez sélective pour faire disparaître la gêne acoustique spécifique à l'émergence des sons purs.

En revanche, la cinquième et dernière action physique précitée permet de réduire efficacement le bruit de raies, mais toutefois uniquement dans une bande étroite de fréquences, définie à la conception.

Ces différentes solutions ne sont donc pas totalement efficaces, notamment pour les bruits de raies engendrés par des excitations vibratoires.

Une solution combinant une ou plusieurs de ces actions physiques préconise de créer des insonorisations passives sous forme de panneaux d'habillage montés dans le poste de pilotage ou dans la cabine des passagers. Ces panneaux sont conçus en fonction de la zone structurale à traiter et du spectre de fréquences à atténuer.

Toutefois, cette dernière solution présente également de nombreux inconvénients et notamment :

- une réduction de bruit limitée surtout en basses fréquences ;
- une augmentation de masse élevée, qui peut être de plusieurs centaines de kilogrammes pour un hélicoptère de grande taille ;
- une perte de volume non négligeable, notamment lors de l'utilisation de panneaux épais en vue d'augmenter l'effet d'absorption acoustique ; et
- des fuites acoustiques, en particulier au niveau des trous de câblage et des joints entre les panneaux.

Par conséquent, aucune des solutions connues et précitées n'est totalement satisfaisante pour réduire la gêne occasionnée par les bruits, notamment les bruits de raies.

La présente invention a pour objet de remédier à ces inconvénients. Elle concerne un panneau insonorisant, en particulier un panneau structural ou un panneau d'habillage, qui présente des performances acoustiques améliorées.

A cet effet, ledit panneau insonorisant est remarquable, selon l'invention, en ce qu'il comporte les caractéristiques de la revendication 1.

Ainsi, grâce à l'invention, le glissement relatif des corps solides, d'une part les uns par rapport aux autres et, d'autre part, par rapport auxdites plaques, permet de dissiper une partie de l'énergie vibratoire circulant dans ledit panneau insonorisant et ainsi de réduire l'énergie qui est transmise sous forme acoustique à l'air, ce qui permet d'améliorer considérablement les performances acoustiques dudit panneau insonorisant.

La présente invention permet ainsi d'agir sur les deux types de réponse vibroacoustique d'un panneau, à savoir :

- le rayonnement acoustique du panneau sous l'effet de sollicitations mécaniques localisées, telles que par exemple les vibrations aux fréquences d'engrènement de la boîte de transmission principale d'un hélicoptère ; et
- la transmission acoustique du panneau sollicité par un champ de pression dynamique d'origine acoustique ou aérodynamique, comme par exemple, sur un hélicoptère, le bruit émis par le carter de la boîte de transmission principale ou le bruit d'entrée d'air excitant le plafond de la cabine.

On notera que la présente invention permet d'améliorer de façon importante les performances d'insonorisation du panneau dans le domaine des fréquences dites "SIL4" ("Speech Interference Level"), qui est constitué par les quatre octaves de fréquences centrales : 500 Hz, 1000 Hz, 2000 Hz et 4000 Hz.

De façon avantageuse, les corps solides, en contact les uns avec les autres (et pour certains avec lesdites plaques) peuvent être soit directement en contact, soit en contact par l'intermédiaire d'un élément de structure.

Dans le cadre de la présente invention, lesdits corps solides, qui sont par exemple réalisés en matière synthétique, de préférence des billes, peuvent être :

- soit pleins, toute leur masse étant alors occupée par de la matière ;
- soit creux, ce qui permet de réduire le poids desdits corps solides et donc également le poids du panneau insonorisant.

De plus, selon l'invention, lesdits corps solides peuvent être réalisés dans des matériaux différents (matière synthétique, métal, ...) et/ou présenter des formes et/ou des tailles (diamètres) différentes.

On notera que :

- une différence d'inertie desdits corps solides, due notamment à des tailles ou des densités différentes ; et/ou
- une différence de raideur desdits corps solides, due notamment à des matériaux différents,

entraînent un mouvement différent sous l'effet d'une excitation vibratoire et donc également une amplitude de dissipation d'énergie différente. Par conséquent, par un choix approprié de ces caractéristiques, on peut régler et optimiser la dissipation d'énergie, c'est-à-dire la réduction de bruit, mise en oeuvre par le panneau insonorisant conforme à l'invention.

Dans un mode de réalisation particulier, ledit panneau insonorisant comporte au moins une structure en nid-d'abeilles présentant des alvéoles, qui est agencée dans ledit espace interne, et lesdits corps solides sont disposés dans au moins certaines desdites alvéoles.

Par ailleurs, avantageusement, ledit panneau insonorisant comporte, de plus, au moins une cloison interne, pleine ou percée, de forme et d'orientation quelconques (par exemple parallèle ou orthogonale à l'une ou aux deux plaques), qui est solidaire ou non d'une ou des deux plaques et qui est agencée dans ledit espace interne.

Ceci permet d'augmenter la surface d'échange (frottement) entre le panneau et l'agrégat et donc également la dissipation de l'énergie susceptible d'être transmise sous forme acoustique.

Par ailleurs, avantageusement, ledit agrégat comprend de plus un liquide visqueux remplissant les espaces entre lesdits corps solides.

Dans un mode de réalisation particulier, lesdites plaques opposées du panneau insonorisant sont perforées. De telles perforations permettent, par exemple un transfert de gaz au travers du panneau insonorisant (en particulier dans le cas d'un moteur confiné dans une enceinte comprenant de tels panneaux insonorisants) ou le passage d'un flux lumineux résiduel (surveillance à l'intérieur d'une enceinte comprenant des panneaux insonorisants : bon fonctionnement en absence ou, selon cas, en présence d'une intensité lumineuse, ...).

En plus des avantages précités, le panneau insonorisant conforme à l'invention présente également les avantages suivants :

- il présente une masse additionnelle réduite (notamment lorsque l'on utilise des corps solides creux) par rapport au panneau de base (à insonoriser) ;
- il n'occupe pas de volume supplémentaire, contrairement par exemple à des revêtements viscoélastiques collés sur l'une des faces du panneau ;
- il n'entraîne aucune modification de la durée de vie dans le cas de panneaux structuraux tels que le plancher mécanique d'un hélicoptère par exemple ;
- l'agrégat qu'il comporte est protégé contre des agressions externes (feu, humidité, agents corrosifs, ...) par le panneau insonorisant lui-même;

- il ne libère pas de particules (à l'extérieur du panneau), qui pourraient altérer le fonctionnement de pièces tournantes voisines ;
- il peut être monté sur tout aéronef par simple changement de la pièce concernée, puisque la forme extérieure, ainsi que la transmission des efforts statiques ne sont pas changées ;
- il n'est pas soumis à des phénomènes d'abrasion, de corrosion ou d'érosion, si on choisit un couple approprié de matériaux respectivement pour les plaques et l'agrégat ; et
- il peut être facilement réalisé et présente un coût de fabrication faible.

Les figures du dessin annexé feront bien comprendre comment l'invention peut être réalisée. Sur ces figures, des références identiques désignent des éléments semblables.

Les figures 1 à 5 montrent schématiquement différents modes de réalisation d'un panneau insonorisant conforme à l'invention.

La figure 6 illustre schématiquement une application particulière d'un panneau insonorisant conforme à l'invention.

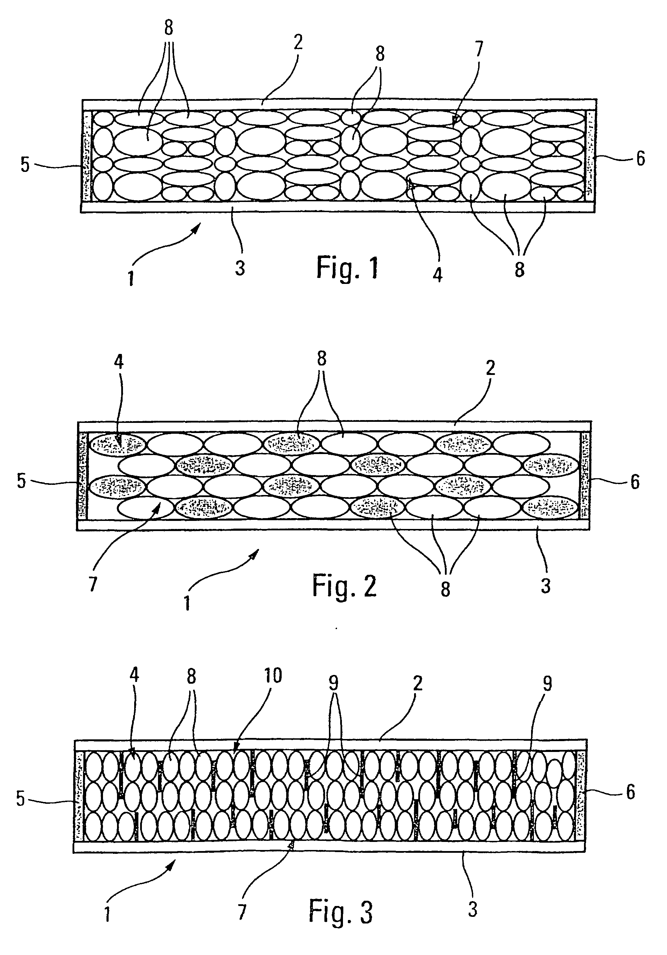

Le panneau insonorisant 1 conforme à l'invention et représenté schématiquement sur les figures 1 à 5, selon différents modes de réalisation, comporte :

- deux plaques opposées 2 et 3 qui forment entre elles un espace interne creux 4. A cet effet, lesdites plaques 2 et 3 peuvent être reliées ensemble par l'intermédiaire de plaques latérales 5 et 6 ; et
- un agrégat 7 qui comprend des corps solides 8 en contact et qui remplit complètement ledit espace interne 4.

Ainsi, grâce à l'invention, le glissement relatif des corps solides 8, d'une part les uns par rapport aux autres et, d'autre part, par rapport auxdites plaques 2, 3, 5 et 6, permet de dissiper une partie de l'énergie vibratoire circulant dans ledit panneau insonorisant 1 et ainsi de réduire l'énergie qui est transmise sous forme acoustique à l'air, ce qui permet d'améliorer considérablement les performances acoustiques dudit panneau insonorisant 1.

La présente invention permet ainsi d'agir sur les deux types de réponse vibroacoustique d'un panneau insonorisant 1, à savoir :

- le rayonnement acoustique du panneau 1 sous l'effet de sollicitations mécaniques localisées ; et
- la transmission acoustique du panneau 1 sollicité par un champ de pression dynamique d'origine acoustique ou aérodynamique.

On notera que la présente invention permet d'améliorer de façon importante les performances d'insonorisation du panneau 1 dans le domaine des fréquences dites "SIL4" ("Speech Interference Level"), qui est constitué par les quatre octaves de fréquences centrales : 500 Hz, 1000 Hz, 2000 Hz et 4000 Hz.

Les deux plaques 2 et 3 qui, assemblées, forment une structure sandwich, peuvent être réalisées en différents matériaux, par exemple en matière synthétique ou en métal léger.

De plus, ces plaques 2 et 3 peuvent présenter des formes variées. Elles peuvent notamment être planes ou présenter un ou plusieurs rayons de courbure.

En outre, elles peuvent être agencées parallèlement l'une par rapport à l'autre, comme représenté sur les figures 1 à 5, ou présenter une position relative différente, notamment quelconque.

Dans le cadre de la présente invention, lesdits corps solides 8, qui sont réalisés par exemple en matière synthétique, de préférence des billes, peuvent être :

- soit pleins, toute leur masse étant alors occupée par de la matière ;
- soit creux, ce qui permet de réduire le poids desdits corps solides 8 et donc également le poids du panneau insonorisant 1.

De plus, selon l'invention, lesdits corps solides 8 :

- peuvent être réalisés dans des matériaux différents (polymère, céramique métallique, élastomère, ...), comme cela est représenté sur la figure 2 qui montre des corps solides 8 de noircissements différents (clair ou sombre), qui sont de forme et de taille identiques, mais qui sont réalisés dans des matériaux différents ; et/ou
- peuvent présenter des formes et/ou des tailles (diamètres) différentes, comme cela est représenté sur la figure 1.

On notera que :

- une différence d'inertie desdits corps solides 8, due notamment à des tailles ou des densités différentes ; et/ou
- une différence de raideur desdits corps solides 8, due notamment à des matériaux différents,

entraînent un mouvement différent sous l'effet d'une excitation vibratoire et donc également une amplitude de dissipation d'énergie différente. Par conséquent, par un choix approprié de ces caractéristiques, on peut régler et optimiser la dissipation d'énergie, c'est-à-dire la réduction de bruit, mise en oeuvre par le panneau insonorisant 1 conforme à l'invention.

Selon l'invention, les corps solides 8, en contact les uns avec les autres (et pour certains avec lesdites plaques 2, 3, 5 et 6) peuvent être soit directement en contact, soit en contact par l'intermédiaire d'un élément de structure 9, comme représenté par exemple sur la figure 3.

Dans le mode de réalisation particulier de la figure 3, ledit panneau insonorisant 1 comporte au moins une structure 9 en nid-d'abeilles qui présente des alvéoles 10, qui est agencée dans ledit espace interne 4, et qui est par exemple réalisée en métal ou en matière composite, et lesdits corps solides 8 sont disposés dans au moins certaines desdites alvéoles 10.

En plus desdits corps solides 8, pleins ou creux, l'agrégat 7 peut également comporter un liquide visqueux, remplissant les espaces libres dans l'espace interne 4 entre lesdits corps solides 8. Ces derniers sont alors noyés dans un milieu lubrifiant, ce qui permet de retarder un éventuel échauffement.

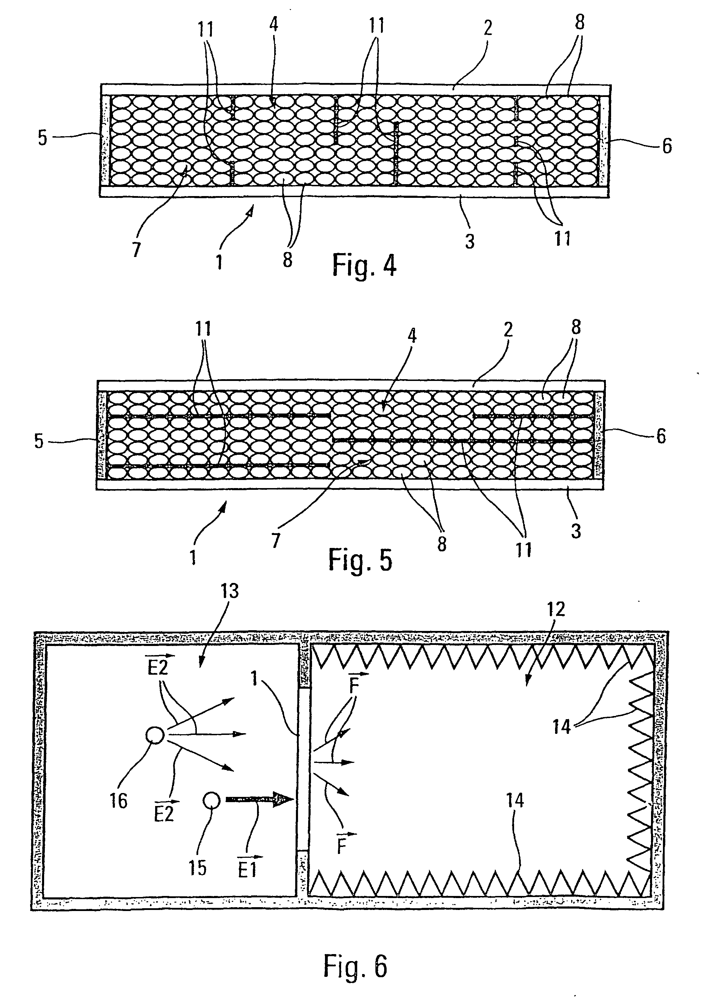

Par ailleurs, dans un mode de réalisation particulier représenté sur les figures 4 et 5, le panneau insonorisant 1 comporte des cloisons internes 11 qui sont solidaires d'une ou plusieurs des plaques 2, 3, 5 et 6. Ces cloisons 11 peuvent être pleines ou percées et présenter des formes quelconques.

De préférence, elles sont planes et sont, soit orthogonales aux plaques 2 et 3 qui sont parallèles entre elles (figure 4), soit parallèles auxdites plaques 2 et 3 (figure 5).

Ces cloisons internes 11 permettent d'augmenter la surface d'échange et donc la surface de frottement entre, d'une part, les faces internes des plaques 2, 3, 5 et 6 et, d'autre part, l'agrégat 7, ce qui permet d'accroître la dissipation de l'énergie vibratoire (circulant dans le panneau insonorisant 1 et susceptible d'être transmise sous forme acoustique à l'air environnant).

La présente invention peut être appliquée à tout type de panneau insonorisant 1 et, en particulier, bien que non exclusivement, à des panneaux utilisés dans le domaine aéronautique et notamment sur des aéronefs à voilure tournante.

A titre d'illustration, sur un tel aéronef à voilure tournante, par exemple un hélicoptère, la présente invention peut être appliquée :

- à des parties sandwich des parois du fuselage constituant le poste de pilotage : plafond, portes, cloisons, de séparation, ... ;
- à l'habillage de la cabine des passagers, sur les parties fixes (entablements, panneaux, ...) ou mobiles (portes, ...) ;
- au capotage de moteurs ;
- au capotage d'entrées d'air d'un moteur ou de l'entrée d'air de la boîte de transmission principale ;
- au capotage des carters de boîtes de transmission ; et
- à l'isolation d'armoires électriques comprenant un ou plusieurs ventilateurs de refroidissement.

Dans une telle application, ledit panneau insonorisant 1 conforme à l'invention peut réduire de nombreux types de bruits, et en particulier :

- le bruit d'engrènement ou de roulement de boîtes de transmission (BTP, BTI, BTA) ;
- le bruit d'engrènement ou de roulement de boîtiers accessoires (pompes de lubrification, entraînement d'un groupe de ventilation, climatisation, ...) ;
- le bruit d'entrée d'air d'un moteur ou de la boîte de transmission principale BTP ;
- le bruit de ventilation ;
- le bruit de chauffage ; et
- le bruit de climatisation.

A titre d'exemple, le panneau insonorisant 1 conforme à l'invention peut être un panneau structural isolant acoustiquement un espace clos 12, par exemple le poste de pilotage ou la cabine des passagers d'un hélicoptère, par rapport à du bruit issu d'un espace 13 avoisinant, comme représenté sur la figure 6. Généralement, ledit espace clos insonorisé 12 est muni de moyens 14 supplémentaires et connus, de réduction ou d'absorption de bruit.

Dans ce cas, le panneau insonorisant 1 est destiné à réduire le bruit illustré par des flèches $\vec{F}$ sur la figure 6, qui pénètre dans l'espace insonorisé 12, en réduisant :

- le rayonnement acoustique engendré sous l'effet de sollicitations mécaniques localisées, illustrées par un flèche $\vec{E1}$, à savoir des forces ou des moments dynamiques provenant d'un élément mobile ou vibrant 15, par exemple l'excitation $\vec{E1}$ provenant des attaches de pied 15 de barres de suspension de la boîte de transmission principale d'un hélicoptère ; et/ou
- la transmission acoustique, sollicitée par un champ de pression dynamique d'origine acoustique ou aérodynamique, illustrée par des flèches $\vec{E2}$ , par exemple le bruit extérieur $\vec{E2}$ provenant du carter 16 de la boîte de transmission principale d'un hélicoptère.

En plus des avantages précités, le panneau insonorisant 1 conforme à l'invention présente également les avantages suivants :

- il présente une masse additionnelle réduite (notamment lorsque l'on utilise des corps solides 8 creux) par rapport à un panneau de base à insonoriser, c'est-à-dire un panneau sandwich usuel avant l'ajout de corps solides 8 dans son espace interne 4 dans le but de l'insonoriser ;
- il n'occupe pas de volume supplémentaire par rapport à un tel panneau de base, contrairement par exemple à des revêtements viscoélastiques collés sur l'une des faces du panneau ;
- il n'entraîne aucune modification de la durée de vie dans le cas de panneaux structuraux, tels que le plancher mécanique d'un hélicoptère par exemple ;
- l'agrégat 7 qu'il comporte est protégé contre des agressions externes (feu, humidité, agents corrosifs, ...) par le panneau insonorisant 1 lui-même ;

- il ne libère pas de particules à l'extérieur du panneau 1, qui pourraient altérer le fonctionnement de pièces tournantes voisines ;

- il peut être monté sur tout appareil, mobile ou aéronef par simple changement de la pièce concernée, puisque la forme extérieure, ainsi que la transmission des efforts statiques ne sont pas changées ;

- il n'est pas soumis à des phénomènes d'abrasion, de corrosion ou d'érosion, si on choisit un couple approprié de matériaux respectivement pour les plaques 2, 3, 5 et 6 et l'agrégat 7 ; et

- il peut être facilement réalisé et présente un coût de fabrication faible.

**Revendications**

1. Panneau insonorisant, qui comporte :

   - au moins deux plaques opposées (2,3,5,6) sensiblement planes formant entre elles un espace interne (4) ; et
   - un agrégat (7) qui comprend au moins des corps solides (8) en contact et qui remplit complètement ledit espace interne (4), au moins certains desdits corps solides (8) étant directement en contact les uns avec les autres,

   **caractérisé en ce que** lesdits corps solides (8) peuvent glisser, d'une part, les uns par rapport aux autres et, d'autre part, par rapport auxdites plaques (2, 3,5,6) de manière à dissiper par frottement une partie de l'énergie vibratoire circulant dans ledit panneau insonorisant (1) et susceptible d'être transmise sous forme acoustique à l'air environnant et **en ce que** ledit espace interne est fermé.

2. Panneau insonorisant selon la revendication 1, **caractérisé en ce qu'**au moins certains desdits corps solides (8) sont en contact les uns avec les autres, par l'intermédiaire d'au moins un élément de structure (9).

3. Panneau insonorisant selon l'une des revendications 1 et 2, **caractérisé en ce qu'**il comporte au moins une structure (9) en nid d'abeilles présentant des alvéoles (10), qui est agencée dans ledit espace interne (4), et **en ce que** lesdits corps solides (8) sont disposés dans au moins certaines desdites alvéoles (10).

4. Panneau insonorisant selon l'une des revendications 1 à 3, **caractérisé en ce qu'**au moins certains desdits corps solides (8) sont creux.

5. Panneau insonorisant selon l'une quelconque des revendications précédentes, **caractérisé en ce que** certains desdits corps solides (8) sont pleins.

6. Panneau insonorisant selon l'une quelconque des revendications précédentes, **caractérisé en ce que** ledit agrégat (7) comporte des corps solides (8) réalisés dans des matériaux différents.

7. Panneau insonorisant selon l'une quelconque des revendications précédentes, **caractérisé en ce que** ledit agrégat (7) comporte des corps solides (8) présentant des formes différentes.

8. Panneau insonorisant selon l'une quelconque des revendications précédentes, **caractérisé en ce que** ledit agrégat (7) comporte des corps solides (8) présentant des tailles différentes.

9. Panneau insonorisant selon l'une quelconque des revendications précédentes, **caractérisé en ce qu'**il comporte de plus au moins une cloison interne (11) qui est agencée à l'intérieur dudit espace interne (4), sensiblement parallèlement auxdites plaques (2,3) qui sont sensiblement parallèles entre elles.

10. Panneau insonorisant selon l'une quelconque des revendications précédentes, **caractérisé en ce qu'**il comporte de plus au moins une cloison interne (11) qui est agencée à l'intérieur dudit espace interne (4), sensiblement orthogonalement auxdites plaques (2,3) qui sont sensiblement parallèles entre elles.

11. Panneau insonorisant selon l'une des revendications 9 et 10, **caractérisé en ce que** ladite cloison interne (11) est au moins partiellement pleine.

12. Panneau insonorisant selon l'une des revendications 9 à 11, **caractérisé en ce que** ladite cloison interne (11) est au moins partiellement percée.

13. Panneau insonorisant selon l'une quelconque des revendications précédentes, **caractérisé en ce que** ledit agrégat (7) comprend de plus un liquide visqueux remplissant les espaces entre lesdits corps solides.

14. Panneau insonorisant selon l'une quelconque des revendications précédentes, **caractérisé en ce que** lesdites plaques opposées sont perforées.

**Patentansprüche**

1. Schalldämpferplatte, die aufweist:

- mindestens zwei im Wesentlichen ebene, einander gegenüberliegende Platten (2, 3, 5, 6), die zwischen sich einen Innenraum (4) bilden; und
- ein Aggregat (7), das mindestens in Kontakt stehende Festkörper (8) aufweist und den Innenraum (4) vollständig füllt, wobei mindestens einige der Festkörper (8) direkt miteinander in Verbindung stehen,

dadurch gekennzeichnet, dass die Festkörper (8) einerseits zueinander und andererseits zu den Platten (2, 3, 5, 6) gleiten können, um durch Reibung einen Teil der Schwingungsenergie zu dissipieren, die in der Schalldämpferplatte (1) zirkuliert und in akustischer Form in die Umgebungsluft übertragen werden kann, und dass der Innenraum geschlossen ist.

2. Schalldämpferplatte nach Anspruch 1, **dadurch gekennzeichnet, dass** mindestens einige der Festkörper (8) über mindestens ein Strukturelement (9) miteinander in Kontakt stehen.

3. Schalldämpferplatte nach einem der Ansprüche 1 und 2, **dadurch gekennzeichnet, dass** sie mindestens eine wabenförmige Struktur (9) aufweist, die Zellen (10) besitzt und im Innenraum (4) ausgebildet ist, und dass die Festkörper (8) in mindestens einigen der Zellen (10) angeordnet sind.

4. Schalldämpferplatte nach einem der Ansprüche 1 bis 3, **dadurch gekennzeichnet, dass** mindestens einige der Festkörper (8) hohl sind.

5. Schalldämpferplatte nach einem der vorhergehenden Ansprüche, **dadurch gekennzeichnet, dass** einige der Festkörper (8) massiv sind.

6. Schalldämpferplatte nach einem der vorhergehenden Ansprüche, **dadurch gekennzeichnet, dass** das Aggregat (7) Festkörper (8) aufweist, die aus unterschiedlichen Materialien hergestellt sind.

7. Schalldämpferplatte nach einem der vorhergehenden Ansprüche, **dadurch gekennzeichnet, dass** das Aggregat (7) Festkörper (8) in verschiedenen Formen aufweist.

8. Schalldämpferplatte nach einem der vorhergehenden Ansprüche, **dadurch gekennzeichnet, dass** das Aggregat (7) Festkörper (8) mit unterschiedlichen Größen enthält.

9. Schalldämpferplatte nach einem der vorhergehenden Ansprüche, **dadurch gekennzeichnet, dass** sie außerdem mindestens eine innere Trennwand (11) aufweist, die im Inneren des Innenraums (4) im Wesentlichen parallel zu den Platten (2, 3) angeordnet ist, die zueinander im Wesentlichen parallel sind.

10. Schalldämpferplatte nach einem der vorhergehenden Ansprüche, **dadurch gekennzeichnet, dass** sie außerdem mindestens eine innere Trennwand (11) aufweist, die im Inneren des Innenraums (4) im Wesentlichen orthogonal zu den Platten (2, 3) angeordnet ist, die zueinander im Wesentlichen parallel sind.

11. Schalldämpferplatte nach einem der Ansprüche 9 und 10, **dadurch gekennzeichnet, dass** die innere Trennwand (11) zumindest teilweise massiv ist.

12. Schalldämpferplatte nach einem der Ansprüche 9 bis 11, **dadurch gekennzeichnet, dass** die innere Trennwand (11) zumindest teilweise gelocht ist.

13. Schalldämpferplatte nach einem der vorhergehenden Ansprüche, **dadurch gekennzeichnet, dass** das Aggregat (7) außerdem eine viskose Flüssigkeit enthält, die die Zwischenräume zwischen den Festkörpern ausfüllt.

14. Schalldämpferplatte nach einem der vorhergehenden Ansprüche, **dadurch gekennzeichnet, dass** die einander gegenüberliegenden Platten gelocht sind.

**Claims**

1. A soundproofing panel, including:

   - at least two opposing and substantially planar plates (2, 3, 5, 6) which form an inner space (4) between them; and
   - an aggregate (7) which comprises at least firm bodies (8) which are in contact and which completely fills the said inner space (4), at least some of the said firm bodies (8) being directly in contact with one another,

   **characterised in that** the said firm bodies (8) can slide on the one hand with respect to one another and on the other with respect to the said plates (2, 3, 5, 6) such that some of the vibration energy circulating in the said soundproofing panel (1) and capable of being transmitted in acoustic form to the surrounding air is dissipated by friction, and **in that** the said inner space is closed.

2. A soundproofing panel according to Claim 1, **characterised in that** at least some of the said firm bodies (8) are in contact with one another by way of at least one structural element (9).

**3.** A soundproofing panel according to either of Claims 1 and 2, **characterised in that** it includes at least one structure (9) in honeycomb form having cells (10), which is arranged in the said inner space (4), and **in that** the said firm bodies (8) are disposed in at least some of the said cells (10).

**4.** A soundproofing panel according to one of Claims 1 to 3, **characterised in that** at least some of the said firm bodies (8) are hollow.

**5.** A soundproofing panel according to any one of the preceding claims, **characterised in that** some of the said firm bodies (8) are solid.

**6.** A soundproofing panel according to any one of the preceding claims, **characterised in that** the said aggregate (7) includes firm bodies (8) made of different materials.

**7.** A soundproofing panel according to any one of the preceding claims, **characterised in that** the said aggregate (7) includes firm bodies (8) of different shapes.

**8.** A soundproofing panel according to any one of the preceding claims, **characterised in that** the said aggregate (7) includes firm bodies (8) of different sizes.

**9.** A soundproofing panel according to any one of the preceding claims, **characterised in that** it further includes at least one inner partition (11) which is arranged inside the said inner space (4), substantially parallel to the said plates (2, 3), which are substantially parallel to one another.

**10.** A soundproofing panel according to any one of the preceding claims, **characterised in that** it further includes at least one inner partition (11) which is arranged inside the said inner space (4), substantially at a right angle to the said plates (2, 3), which are substantially parallel to one another.

**11.** A soundproofing panel according to either of Claims 9 and 10, **characterised in that** the said inner partition (11) is solid at least in certain parts.

**12.** A soundproofing panel according to one of Claims 9 to 11, **characterised in that** the said inner partition (11) is pierced at least in certain parts.

**13.** A soundproofing panel according to any one of the preceding claims, **characterised in that** the said aggregate (7) further comprises a viscous liquid filling the spaces between the said firm bodies.

**14.** A soundproofing panel according to any one of the preceding claims, **characterised in that** the said opposing plates are perforated.

Fig. 1

Fig. 2

Fig. 3

Fig. 4

Fig. 5

Fig. 6